# EUROPÄISCHE PATENTSCHRIFT

(11) **EP 3 180 561 B1**
(45) Veröffentlichungstag und Bekanntmachung des Hinweises auf die Patenterteilung: **29.08.2018**
(21) Anmeldenummer: 16779063.3
(22) Anmeldetag: 07.10.2016
(51) Int. Cl.: F21S 4/28, B60S 3/06, B60S 3/00

(54) **RADLEITSCHIENE UND FAHRZEUGBEHANDLUNGSANLAGE**
WHEEL GUIDE RAIL AND VEHICLE TREATMENT INSTALLATION
RAIL GUIDE-ROUE ET INSTALLATION DE TRAITEMENT DE VÉHICULE

(30) Priorität: 08.10.2015 DE 102015012967
(43) Veröffentlichungstag der Anmeldung: 21.06.2017
(73) Patentinhaber: WashTec Holding GmbH, 86153 Augsburg (DE)
(72) Erfinder: FISCHER, Ronald, 86179 Augsburg (DE); BRAUNBARTH, Michael, 86916 Kaufering (DE); KIRCHEIS, Richard, 86169 Augsburg (DE)
(74) Vertreter: Reitstötter Kinzebach
(86) Internationale Anmeldenummer: PCT/EP2016/074012
(87) Internationale Veröffentlichungsnummer: WO 2017/060435

(56) Entgegenhaltungen:
- DE-A1-102008 034 571
- DE-U1-202012 103 410

## Beschreibung

Die Erfindung betrifft eine Radleitschiene für eine Fahrzeugbehandlungsanlage nach dem Oberbegriff des Anspruchs 1 sowie eine Fahrzeugbehandlungsanlage nach dem Oberbegriff des Anspruchs 15.

Die gattungsgemäße DE 20 2012 103 410 U1 offenbart eine Leuchteinrichtung, bei der eine Mehrzahl von in einer Reihe angeordneter Leuchtelemente gemeinsam auf einem länglichen Träger angeordnet sind, der an einer Leitschiene angeordnet ist. Dies weist den Nachteil auf, dass bei Ausfall eines der Leuchtelemente stets sämtliche unbeschädigten Leuchtelemente mitsamt des länglichen Trägers ausgetauscht werden müssen, was aufwändige Montagearbeiten erfordert. Zudem gestaltet sich selbst bei funktionierenden Leuchtelementen der Austausch einzelner Leuchtelemente. Welche beispielsweise Energiesparender sind oder andere Leuchtfunktionen aufweisen, aufwendig.

Es ist deshalb Aufgabe der vorliegenden Erfindung, die oben genannten Nachteile zu überwinden und eine Radleitschiene und eine Fahrzeugbehandlungsanlage bereitzustellen, die eine wartungsfreundliche Beleuchtung der Fahrzeugbehandlungsanlage ermöglichen.

Diese Aufgabe erlöst die Erfindung durch eine Radleitschiene mit den Merkmalen des Anspruchs 1 und eine Fahrzeugbehandlungsanlage mit den Merkmalen des Anspruchs 15. Vorteilhafte Ausgestaltungen und zweckmäßige Weiterbildungen der Erfindung sind in den Unteransprüchen angegeben.

Die Radleitschiene ist erfindungsgemäß dadurch gekennzeichnet, dass ihr Gehäuse mehrere über seine Länge verteilte Öffnungen aufweist und dass mehrere Leuchtmodule vorgesehen sind, deren jedes einen Montagesockel, der in einer der Öffnungen des Gehäuses montiert ist, und wenigstens ein in dem Montagesockel montiertes Leuchtmittel umfasst.

Vorzugsweise sind die Montagesockel becherartig ausgebildet, mit einem Boden und einer umlaufenden Wand umfasst, die eine zum Innern des Gehäuses hin offene Aussparung begrenzen, in der das Leuchtmittel, durch den Boden vor den in der Fahrzeugbehandlungsanlage verwendeten Reinigungsflüssigkeiten geschützt, untergebracht ist. Der Boden sollte dann für Licht des Leuchtmittels transparent sein.

Um die Gefahr einer Beschädigung des Leuchtmoduls, insbesondere seines Montagesockels, durch Kontakt mit den Reifen eines Fahrzeugs zu minimieren, sollte der Boden mit einer Flanke des Gehäuses, in der die Öffnungen gebildet sind, bündig oder hinter die Flanke ins Gehäuse hinein zurückversetzt sein.

An einer Außenseite der umlaufenden Wand des Montagesockels kann ein Anschlagsteg vorgesehen sein, der, indem er an einer Außenseite des Gehäuses anliegt, eine Anschlagposition für den Einbau des Leuchtmoduls festlegt. Um die oben angesprochene Bündigkeit oder den Versatz des Bodens ins Gehäuseinnere zu realisieren, kann der Teil des Gehäuses, an dem der Anschlagsteg anliegt, eine Vertiefung in der einem Waschbereich der Fahrzeugbehandlungsanlage zugewandten inneren Flanke des Gehäuses sein.

Zwischen dem Anschlagsteg und der Außenseite des Gehäuses kann ein Aufnahmeschlitz vorgesehen sein, in den ein Werkzeugs, insbesondere ein Schraubenzieher, eingeführt und gedreht oder in anderer geeigneter Weise bewegt werden kann, um, wenn ein Leuchtmodul ausgewechselt werden muss, den Montagesockel aus dem Gehäuse herauszudrücken.

Zwischen dem Anschlagsteg und der Außenseite des Gehäuses sollte ein elastisch komprimierbares Element vorgesehen sein. Dieses elastisch komprimierbare Element kann eine Dichtung sein, muss es aber nicht; seine Funktion kann sich auch darauf beschränken, durch seine elastische Spannung eine an anderer Stelle zwischen Montagesockel und Gehäuse vorgesehene Dichtung an das Gehäuse angedrückt zu halten.

Der Montagesockel ist vorzugsweise einteilig spritzgeformt. So sind die Dichtigkeit aller im eingebauten Zustand freiliegenden Oberflächen des Leuchtmoduls und der Schutz des Leuchtmittels vor eindringender Feuchtigkeit kostengünstig gewährleistet.

Einer bevorzugten Ausgestaltung zufolge ist die umlaufende Wand mit einem Außengewinde versehen, und eine auf das Außengewinde geschraubte Überwurfmutter liegt an einer Innenseite des Gehäuses an, wobei sie ggf. das komprimierbare Element so weit komprimiert hält, dass dieses als Dichtung wirken kann.

Um bei dieser Ausgestaltung die Überwurfmutter lösen zu können, sollte das Gehäuse von einem Boden der Fahrzeugbehandlungsanlage, an dem es normalerweise befestigt ist, lösbar sein, damit über eine offene Unterseite des Gehäuses ein Zugriff auf die Überwurfmutter in seinem Inneren möglich ist.

Einer zweiten bevorzugten Ausgestaltung zufolge ist die umlaufende Wand mit einer an ihrer Außenseite umlaufenden Nut versehen, und ein an einer Innenseite des Gehäuses anliegender Bügel sichert den Montagesockel am Gehäuse, indem er wenigstens an zwei einander gegenüberliegenden Stellen in die Nut eingreift. Auch hier kann der Bügel ggf. das komprimierbare Element in einem dichtenden, komprimierten Zustand halten. Zum Einführen des Bügels in die Nut bzw. zum Lösen daraus ist ein Zugriff auf das Innere des Gehäuses erforderlich.

Einer besonders bevorzugten dritten Ausgestaltung zufolge trägt die umlaufende Wand einen Dichtring, der in Kontakt mit der Innenseite des Gehäuses elastisch verformt ist.

Dieser Dichtring kann in Kontakt mit einer scharfen Kante des Gehäuses stehen, die dessen das Leuchtmodul aufnehmende Öffnung begrenzt. Auch wenn der Dichtring im montierten Zustand einen größeren Durchmesser als die Öffnung hat und dadurch im Normalbetrieb den Montagesockel formschlüssig in dem Gehäuse verriegelt, ist eine Demontage des Leuchtmoduls ohne Zugriff auf das Innere des Gehäuses möglich, da durch Ausübung einer genügend großen Zugkraft auf den Montagesockel, insbesondere mit Hilfe eines in den Aufnahmeschlitz eingeführten Werkzeugs, ein über die Öffnung überstehender Rand des Dichtrings an der scharfen Kante abgeschert werden kann. So wird zwar beim Ausbau eines Leuchtmoduls dessen Dichtring zerstört, doch kann auf diese Weise gleichzeitig sichergestellt werden, dass die Dichtringe ausgetauscht werden, bevor sie möglicherweise altersbedingt verspröden und dadurch unwirksam werden.

Um ein Einführen des Montagesockels in das Gehäuse von außen zu erleichtern und gleichzeitig sicherzustellen, dass die Dichtung zwischen Montagesockel und Gehäuse geklemmt wird, können die Öffnungen des Gehäuses ins Gehäuseinnere hinein verengt sein.

Als eine weitere Maßnahme zum Schutz vor Feuchtigkeit kann das Leuchtmittel im Montagesockel dicht vergossen sein.

Insbesondere bei den Ausgestaltungen, die zum Wechseln eines Leuchtmoduls den Zugriff aufs Innere des Gehäuses erfordern, sollte die Radleitschiene ferner eine Basisplatte umfassen, die eine offene Unterseite des Gehäuses lösbar dicht verschließt. Wenn das Gehäuse zum Wechseln des Leuchtmoduls vom Boden aufgenommen wird, kann die Bodenplatte dort verbleiben. Probleme bei einer Wiederbefestigung am Boden können so vermieden werden.

Die Öffnungen und die Montagesockel können mit zueinander komplementären Codierungen versehen sein, die das Einführen eines Montagesockels in eine Öffnung nur in einer einzigen Orientierung oder einer kleinen Zahl von diskreten Orientierungen erlauben.

Dies ist insbesondere dann sinnvoll, wenn die Leuchtmodule nicht isotrop rings um ihre optische Achse abstrahlen, sondern eine Vorzugsrichtung aufweisen und sichergestellt sein sollte, dass ihr Licht vom Fahrer eines Fahrzeugs beim Einfahren in die Behandlungsanlage gut wahrgenommen wird.

Bevorzugt kann die oben und nachfolgend beschriebene erfindungsgemäße Radleitschiene in einer nachfolgend beschriebenen Fahrzeugbehandlungsanlage verwendet werden.

Die eingangs genannte Fahrzeugbehandlungsanlage ist erfindungsgemäße dadurch gekennzeichnet, dass mindestens eine der Radleitschienen wie oben und nachfolgend beschrieben ausgebildet ist. Bevorzugt kann beidseits des Waschbereichs jeweils eine der erfindungsgemäßen Radleitschienen montiert sein.

Weitere Besonderheiten und Vorzüge der Erfindung ergeben sich aus der folgenden Beschreibung von bevorzugten Ausführungsbeispielen anhand der Zeichnungen. Es zeigen:
- Fig. 1: eine schematische, teilweise aufgeschnitten Vorderansicht einer erfindungsgemäßen Fahrzeugbehandlungsanlage mit einer erfindungsgemäßen Radleitschiene;
- Fig. 2: eine perspektivische Ansicht einer Radleitscheine aus Fig. 1;
- Fig. 3: eine auseinandergezogene Ansicht eines Leuchtmoduls gemäß einer Ausgestaltung der Erfindung;
- Fig. 4: eine Draufsicht auf das Leuchtmodul aus Fig. 3;
- Fig. 5: das Leuchtmodul aus Fig. 3 teils in Seitenansicht, teils im axialen Schnitt;
- Fig. 6: einen Querschnitt durch die Radleitschiene mit dem darin montierten Leuchtmodul;
- Fig. 7: einen Längsschnitt durch die innere Flanke der Radleitschiene und ein darin montiertes Leuchtmodul gemäß einer alternativen Ausgestaltung ;
- Fig. 8: einen radialen Schnitt durch das Leuchtmodul aus Fig. 7;
- Fig. 9: ein Leuchtmodul gemäß einer weiteren alternativen Ausgestaltung.

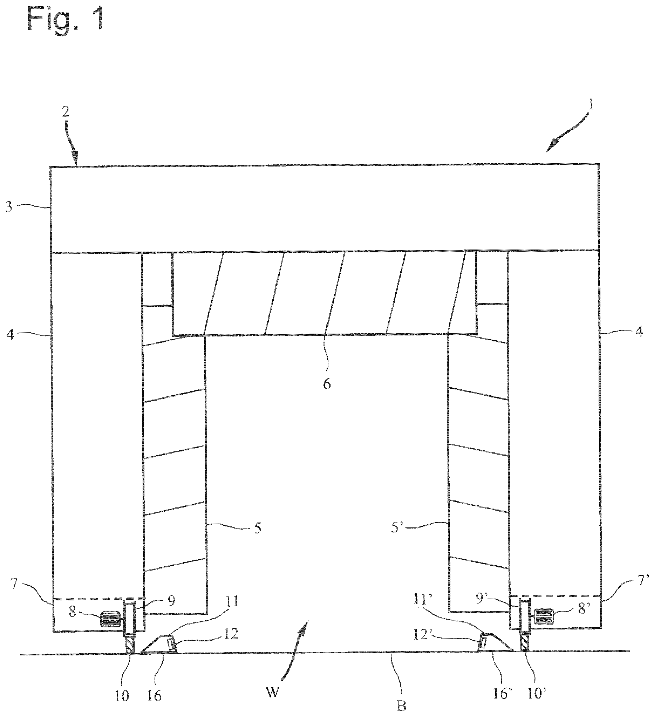

Fig. 1 zeigt eine schematische Vorderansicht einer erfindungsgemäßen Fahrzeugbehandlungsanlage in Form einer Portalwaschanlage 1 mit einem Waschportal 2. Das Waschportal 2 weist zwei durch eine Portaltraverse 3 miteinander verbundene, im Wesentlichen senkrecht stehende Portalsäulen 4, 4' auf. Am Waschportal 2 sind vertikale Seitenwaschbürsten 5, 5' und eine horizontale Dachwaschbürste 6 angeordnet, welche im weiteren auch einfach als Waschbürsten bezeichnet werden.

Das Waschportal 2 ist in eine Längsrichtung L der Portalwaschanlage 1 verfahrbar, um ein in einem Waschbereich W zwischen den Portalsäulen 4, 4' stehendes Fahrzeug F zu behandeln, insbesondere zu waschen, ggf. zu polieren und zu trocknen. Dabei verläuft die ideale Fahrrichtung des Fahrzeugs F im wesentlichen parallel zur Längsrichtung L.

Da die Portalsäulen 4, 4' weitgehend identisch ausgebildet sind, wird die Erfindung nachfolgend anhand der in Fig. 1 linken Portalsäule 4 erläutert. Entsprechende Ausführungen gelten auch für die in Fig. 1 rechte Portalsäule 4', wobei die dortigen Teile mit den gleichen Bezugszeichen wie die entsprechenden Teile auf der linken Seite, ergänzt mit einem Apostroph, bezeichnet werden.

Das untere Ende der Portalsäule 4 weist einen Fahrfuß 7 auf, in dem eine mit einem Fahrantrieb 8 motorisch antreibbare Fahrrolle 9 drehbar gelagert ist. Die Fahrrolle 9 läuft auf einer am Boden B der Portalwaschanlage 1 befestigten Fahrschiene 10.

Die oben beschriebene Ausbildung der Portalwaschanlage 1 ist an sich bekannt und bedarf deshalb keiner weiteren Erläuterung.

Weiter sind zur seitlichen Begrenzung des Waschbereichs W zwischen den Fahrschienen 10, 10' identisch ausgebildete, spiegelbildlich angeordnete Radleitschienen 11, 11' am Boden B montiert. Die Radleitschienen 11, 11' dienen dabei zur Leitung der Räder eines einfahrenden Fahrzeugs und als Signal für den Fahrer, dass der Waschbereich W hier seitlich endet.

Da die Radleitschienen 11, 11' identisch ausgebildet und nur spiegelbildlich montiert sind, wird die Erfindung nachfolgend anhand der in Fig. 1 linken Radleitschiene 11 erläutert. Entsprechende Ausführungen gelten auch für die in Fig. 1 rechte Radleitschiene 11'.

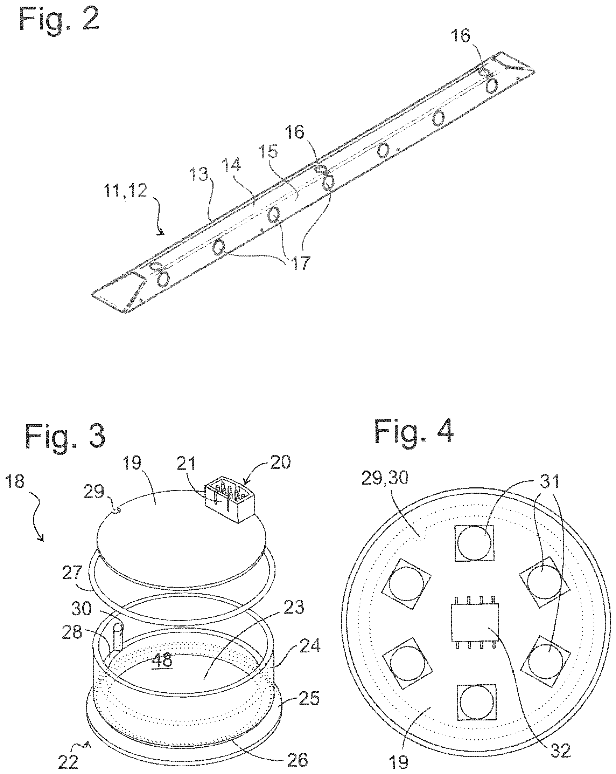

Fig. 2 zeigt die linke Radleitschiene 11 in einer perspektivischen Ansicht. Ein langgestrecktes Gehäuse 12 aus rostfreiem Stahlblech oder anderem gegen die bei der Behandlung der Fahrzeuge eingesetzten Flüssigkeiten unempfindlichem Material hat einen trapezförmigen Querschnitt, wobei eine auf der dem Waschbereich W abgewandten Seite angeordnete Außenflanke 13 weniger stark geneigt ist als eine dem Waschbereich W und somit dem Fahrzeug zugewandte Innenflanke 15. Zwischen den Flanken 13, 15 erstreckt sich eine horizontale Scheitelfläche 14. Schraublöcher 16 in der oberen Stirnseite 14 sind vorgesehen, um nicht gezeigte Schrauben aufzunehmen, die das Gehäuse 12 unmittelbar oder mittelbar am Boden B der Portalwaschanlage 1 verankern.

Die Radleitschiene 11 weist auf ihrer Innenflanke 15 eine Vielzahl von identisch ausgebildeten Öffnungen 17. In den Öffnungen 17 ist jeweils ein Leuchtmodul 18 angeordnet, dessen Aufbau und Funktion nachfolgend anhand von Figuren 3 bis 9 ausführlich dargestellt und erläutert wird.

Fig. 3 zeigt ein Leuchtmodul 18 in einer auseinandergezogenen perspektivischen Ansicht. Leuchtmittel sowie ein integrierter Schaltbaustein zu ihrer Steuerung befinden sich auf der in der Perspektive der Fig. 3 nicht sichtbaren Vorderseite einer Leiterplatte 19. Die sichtbare Rückseite trägt einen Stecker 20, über den die Leuchtmittel und der Schaltbaustein mit einem nicht dargestellten, in dem Gehäuse 12 geführten Bus mit Betriebsspannung und Steuerbefehlen versorgt werden. Der Bus kann als Kabelbaum aufgebaut sein, von dem Anschlüsse für die einzelnen Leuchtmodule 18 abzweigen. Alternativ könnten auch je zwei Stecker an jedem Leuchtmodul 18 vorgesehen sein, um es über im Gehäuse 12 geführte Kabel mit den beiden jeweils in verschiedenen Richtungen benachbarten Leuchtmodulen 18 zu verbinden und so Betriebsspannung und Steuerbefehle über die gesamte Länge der Radleitschiene 11 durchzuschleifen.

Der Bus verwendet für die Übertragung der Steuerbefehle ein beliebiges für den Einsatz in störungsgefährdeter Umgebung geeignetes Protokoll, insbesondere CAN. Die Steuerbefehle steuern das Ein- und Ausschalten der Leuchtmittel einzeln für jedes Leuchtmodul, um durch Lichtsignale wie etwa Blink, Stand- oder Lauflichter dem Fahrer eines in die Anlage einfahrenden Fahrzeugs bestimmte Manöver nahezulegen. Wenn die Leuchtmodule 18 Leuchtmittel in verschiedenen Farben enthalten, kann auch durch Steuern der Farbe des ausgestrahlten Lichts dem Fahrer Information übermittelt werden.

Der Stecker 20 hat eine elastische Zunge 21, die an einem eingeführten komplementären Stecker des Kabelbaums formschlüssig verrastbar ist, um ein unbeabsichtigtes Lösen der Stecker voneinander auszuschließen. Seine asymmetrische Form lässt ein Verbinden mit dem komplementären Stecker nur in einer einzigen Orientierung zu, so dass eine Falschverbindung ausgeschlossen ist.

Ein aus transparentem Kunststoff einteilig spritzgeformter Montagesockel 22 umfasst einen Boden 23, eine rund um den Boden 23 rohrförmig umlaufende Wand 24 und einen sich rings um die Wand 24 erstreckenden Anschlagsteg 25. An der Außenseite der Wand 24 läuft eine Nut 26 um, die vorgesehen ist, um einen Dichtring 27 aufzunehmen. Eine von Boden 23 und Wand 24 begrenzte Aussparung 48 ist vorgesehen, um die Leiterplatte 19 mit den dem Boden 23 zugewandten Leuchtmitteln aufzunehmen; eine Schulter 28 an der Innenseite der Wand 24 legt die Einbautiefe der Leiterplatte 19 fest. Die Orientierung der Leiterplatte 19 ist eindeutig festgelegt durch eine Kerbe 29, in die in Einbauposition eine Rippe 30 des Montagesockels 22 eingreift.

Fig. 4 zeigt eine Draufsicht auf das zusammengebaute Leuchtmodul 18. Durch den durchsichtigen Boden 23 hindurch erkennt man die Leiterplatte 19 mit den darauf montierten Leuchtmitteln, vorzugsweise LEDs 31, und dem Steuerbaustein 32. Die LEDs 31 sind hier der Einfachheit halber mit zur Leiterplatte 19 normaler optischer Achse montiert, so dass sie auch überwiegend in Richtung dieser Achse strahlen; um ihr Licht in Richtung eines in die Waschanlage 1 einfahrenden Fahrzeugs abzulenken, können am Boden 23, vorzugsweise an seiner der Leiterplatte 19 zugewandten Innenseite, Prismen geformt sein.

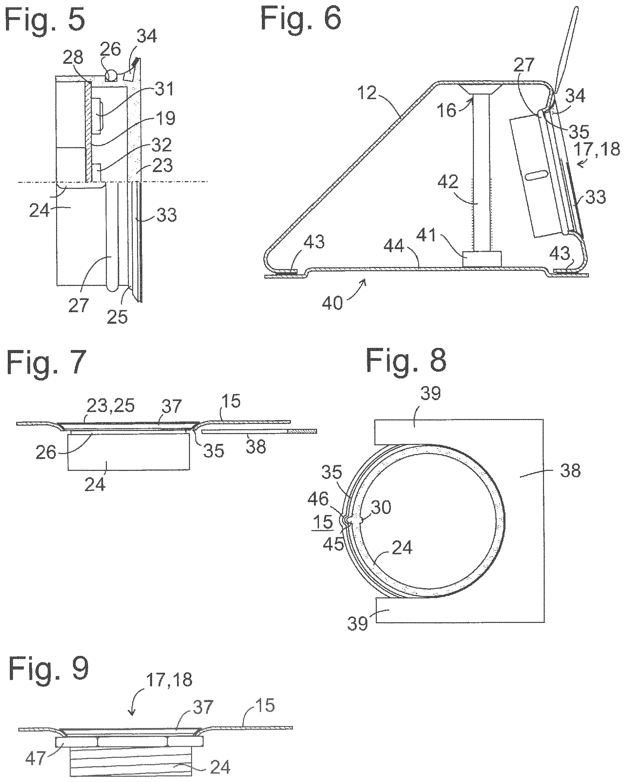

Fig. 5 zeigt das Leuchtmodul 18 teils in einer Seitenansicht, teils im Schnitt. Der Dichtring 27 steht radial aus der Nut 26 vor; in axialer Richtung ist er in der Nut 26 fest gehalten. An der dem Dichtring 27 zugewandten Innenseite ist ein komprimierbares Element, hier in Form eines Rings 33 aus Schaumstoff, angeklebt. Auf einem kurzen Umfangsabschnitt des Anschlagstegs 25 ist ein Aufnahmeschlitz 34 ausgespart.

Fig. 6 zeigt die Radleitschiene 11 mit dem im Gehäuse 12 montierten Leuchtmodul 18 im Querschnitt. Die Ränder der Öffnung 17 bilden einen sich ins Innere des Gehäuses 12 hinein verengenden Kegel. Eine scharfe Kante 35 am Rand der Öffnung ist in den Dichtring 27 eingedrückt, um rings um den Montagesockel 22 einen wasserdichten Kontakt zu erzeugen. Beim erstmaligen Zusammenbau, vor der Montage der Radleitschiene 11 am Boden der Waschanlage 1, kann der Montagesockel 22 ohne den Dichtring 27 in das Gehäuse 12 eingeschoben werden, bis die Nut 26 die Kante 35 vollständig passiert hat und der Ring 33 zwischen dem Anschlagsteg 25 und der Flanke 15 flachgedrückt ist; dann kann der Dichtring 27 von innen her auf die Wand 24 aufgeschoben und in der Nut 26 zum Einrasten gebracht werden.

Die Radleitschiene 11 kann in der Waschanlage 1 montiert werden, indem das Gehäuse mit Hilfe von durch die Schrauböffnungen 16 direkt in Bodenanker eingreifende Schrauben befestigt wird. Diese Schrauben müssen für einen späteren Austausch von Leuchtmodulen 18 nicht wieder gelöst werden, denn um ein Leuchtmodul wieder zu lösen, kann ein Werkzeug 36 wie etwa ein Schraubenzieher zwischen dem Rand der Öffnung 17 und dem Anschlagsteg 25 hindurch in den Aufnahmeschlitz 34 eingeführt und durch Drehen des Werkzeugs 36 der Montagesockel 22 aus der Öffnung 17 herausgetrieben werden, wobei der überstehende Teil des Dichtrings 27 entlang der scharfen Kante 35 abgeschert wird. Zusammen mit dem Leuchtmodul 18 wird auch der daran formschlüssig verankerte Stecker des Kabelbaums herausgezogen. Da nun allerdings die Zunge 21 freiliegt, kann der Formschluss zwischen den Steckern aufgehoben und der Stecker 20 eines neuen Leuchtmoduls 18 mit dem Kabelbaum verbunden werden.

Anschließend wird das neue Leuchtmodul 18 mitsamt seinem Dichtring 27 von außen her in die Öffnung 17 hineingedrückt, bis der Dichtring 27 die Kante 35 passiert hat und hinter der Kante 34 an der Innenseite des Gehäuses eingerastet ist. Wenn das Leuchtmodul 18 losgelassen wird, sorgt die Spannung des Rings 33 dafür, dass die Kante 35 sich in den Dichtring 27 eindrückt.

Fig. 7 zeigt anhand eines Schnittes in Längsrichtung der Radleitschiene durch deren Innenflanke 15 eine alternative Art der Verankerung des Leuchtmoduls 18. Das Leuchtmoduls 18 ist mit dem der anhand von Fig. 3-6 beschriebenen weitestgehend identisch; es fehlt lediglich der Dichtring in der Nut 26; stattdessen ist das komprimierbare Element zwischen dem Anschlagsteg 25 und der Innenflanke 15 als Dichtring 37 aus nicht porösem Material ausgeführt. Wenn das Leuchtmodul 18 so weit in die Öffnung 17 hineingedrückt ist, dass die Nut 26 komplett hinter der Kante 35 liegt, wird an der Innenseite der Flanke 15 einin Fig. 8 in Draufsicht gezeigter Bügel 38 von der Seite her so gegen das Leuchtmodul 18 geschoben, dass Arme 39 des Bügels 38 an gegenüberliegenden Seiten des Montagesockels 12 in die Nut 26 einrücken und, indem sie gleichzeitig an der Innenseite der Flanke 15 anliegen, das Leuchtmodul in der Öffnung 17 verriegeln.

Bei dieser Ausgestaltung ist es beim Austausch eines Leuchtmoduls 18 notwendig, das Gehäuse 12 vom Boden aufzunehmen, um über seine dann offene Unterseite auf den Bügel 38 zugreifen zu können. Um eine erneute Montage des Gehäuses am Boden zu erleichtern, ist wie in Fig.6 gezeigt, eine Basisplatte 40 vorgesehen, die aus demselben Stahlblech wie das Gehäuse 12 gefertigt sein kann. An der Basisplatte 40 sind Muttern 41 komplementär zu den Schraublöchern 16 angeordnet, so dass das Gehäuse 12 am Boden mittelbar, über in die Muttern 41 eingreifende Schrauben 42, befestigt werden kann. Eine Verankerung der Basisplatte 40 am Boden muss nie gelöst werden. Zwischen Basisplatte 40 und Gehäuse 12 klemmen die Schrauben 42 eine Dichtung 43, die sich rings um die offene Unterseite des Gehäuses erstreckt. Um die Platzierung der Dichtung 43 zu erleichtern, kann die Basisplatte 40 einen flachen Vorsprung 44 aufweisen, der im montierten Zustand in die offene Unterseite des Gehäuses eingreift und dessen Ränder die Einbauposition der Dichtung 43 markieren.

In Fig. 8 ist ferner zu erkennen, dass an einer Außenseite der umlaufenden Wand 24, komplementär zu der einwärts gerichteten Rippe 30, eine nach außen vorspringende Rippe 45 in eine Kerbe 46 der Flanke 15 eingreift. Dadurch ist sichergestellt, dass das Leuchtmodul 18 nur in einer einzigen axialen Orientierung eingebaut werden kann. Mit dieser Maßnahme können zwei verschiedene Ziele verfolgt werden. Zum einen kann, wie bereits angesprochen, eine von der Oberflächennormalen der Flanke 15 abweichende Strahlrichtung des Leuchtmoduls eindeutig festgelegt werden; zum anderen kann ein zum Stecker 20 komplementärer Stecker auf Seiten des Gehäuses 12 auch ortsfest angeordnet sein, und der Eingriff stellt sicher, dass das Leuchtmodul 18 nur in einer Orientierung in die Öffnung 17 eingeführt werden kann, in der die Stecker korrekt aufeinandertreffen.

Bei der Ausgestaltung der Fig. 9 ist der Montagesockel 12 an der Außenseite der Wand 24 mit einem Schraubgewinde versehen und wird mit Hilfe einer vom Gehäuseinnern her aufgeschraubten Überwurfmutter 47 in der Öffnung 17 befestigt. Ein Dichtring 37 kann wahlweise zwischen dem Anschlagsteg 25 und der Außenseite der Flanke 15 oder zwischen ihrer Innenseite und der Überwurfmutter 47 eingeklemmt sein. Auch hier ist es für den Austausch eines Leuchtmoduls 18 nötig, auf das Innere des Gehäuses 11 zuzugreifen und es dazu vom Boden B aufzunehmen.

## Patentansprüche

1. Radleitschiene (11) zur seitlichen Begrenzung eines Waschbereichs (W) einer Fahrzeugbehandlungsanlage (1) mit einem langgestreckten Gehäuse (12) und mehreren entlang des Gehäuses verteilten Leuchtmodulen (18), **dadurch gekennzeichnet, dass** das Gehäuse (12) mehrere über seine Länge verteilte Öffnungen (17) aufweist und dass jedes Leuchtmodul (18) einen Montagesockel (22), der in einer der Öffnungen (17) des Gehäuses (12) montiert ist, und wenigstens ein in dem Montagesockel (22) montiertes Leuchtmittel (31) umfasst.

2. Radleitschiene (11) nach Anspruch 1, **dadurch gekennzeichnet, dass** die Montagesockel (22) einen Boden (23) und eine umlaufende Wand (24) umfasst, die eine zum Innern des Gehäuses (12) hin offene Aussparung (48) begrenzen, in der das Leuchtmittel (31) untergebracht ist, und dass der Boden (23) für Licht des Leuchtmittels (31) transparent ist.

3. Radleitschiene nach Anspruch 2, **dadurch gekennzeichnet, dass** der Boden (23) mit einer Flanke (15) des Gehäuses (12), in der die Öffnungen (17) gebildet sind, bündig ist oder hinter die Flanke (15) ins Gehäuse (12) hinein zurückversetzt ist.

4. Radleitschiene nach Anspruch 2 oder 3, **dadurch gekennzeichnet, dass** an einer Außenseite der umlaufenden Wand (24) ein Anschlagsteg (25) vorgesehen ist, der an einer Außenseite des Gehäuses (12) anliegt.

5. Radleitschiene (11) nach Anspruch 4, **dadurch gekennzeichnet, dass** zwischen dem Anschlagsteg (25) und der Außenseite des Gehäuses (12) ein Aufnahmeschlitz (34) zum Einführen eines Werkzeugs (36), insbesondere eines Schraubenziehers, vorgesehen ist.

6. Radleitschiene (11) nach Anspruch 4 oder 5, **dadurch gekennzeichnet, dass** ein elastisch komprimierbares Element (33, 37) zwischen dem Anschlagsteg (25) und der Außenseite des Gehäuses (12) vorgesehen ist.

7. Radleitschiene (11) nach einem der Ansprüche 2 bis 6, **dadurch gekennzeichnet, dass** der Montagesockel (22) einteilig spritzgeformt ist.

8. Radleitschiene (11) nach einem der Ansprüche 2 bis 7, **dadurch gekennzeichnet, dass** die umlaufende Wand (24) mit einem Außengewinde versehen ist und eine auf das Außengewinde geschraubte Überwurfmutter (47) an einer Innenseite des Gehäuses (12) anliegt.

9. Radleitschiene (11) nach einem der Ansprüche 2 bis 7, **dadurch gekennzeichnet, dass** die umlaufende Wand (24) mit einer an ihrer Außenseite umlaufenden Nut (26) versehen ist und ein an einer Innenseite des Gehäuses (12) anliegender Bügel (38) wenigstens an zwei einander gegenüberliegenden Stellen in die Nut (26) eingreift.

10. Radleitschiene (11) nach einem der Ansprüche 2 bis 7, **dadurch gekennzeichnet, dass** die umlaufende Wand (24) einen Dichtring (27) trägt, der in Kontakt mit der Innenseite des Gehäuses (12) elastisch verformt ist.

11. Radleitschiene (11) nach Anspruch 10, **dadurch gekennzeichnet, dass** der Dichtring (27) in Kontakt mit einer scharfen Kante (35) des Gehäuses (12) ist, die dessen das Leuchtmodul (18) aufnehmende Öffnung (17) begrenzt.

12. Radleitschiene nach einem der vorhergehenden Ansprüche, **dadurch gekennzeichnet, dass** das Leuchtmittel (31) im Montagesockel (22) dicht vergossen ist.

13. Radleitschiene nach einem der vorhergehenden Ansprüche, **dadurch gekennzeichnet, dass** sie ferner eine Basisplatte (40) umfasst, die eine offene Unterseite des Gehäuses (12) lösbar dicht verschließt.

14. Radleitschiene nach einem der vorhergehenden Ansprüche, **dadurch gekennzeichnet, dass** die Leuchtmodule (18) mit Steckern (20) für die Energieversorgung und/oder Steuerung der Leuchtmittel versehen sind und zu den Steckern der Leuchtmodule komplementäre Stecker auf Seiten des Gehäuses beweglich und vorzugsweise aus den Öffnungen herausziehbar sind.

15. Fahrzeugbehandlungsanlage, bei der ein Behandlungsbereich (W) seitlich durch eine Fahrzeugleitschiene (11) nach einem der vorhergehenden Ansprüche begrenzt ist.

## Claims

1. Wheel guide rail (11) for lateral delimitation of a washing area (W) of a vehicle treatment installation (1) with an elongated housing (12) and several light modules (18) distributed along the housing, **characterized in that** the housing (12) has several openings (17) distributed over its length and **in that** each light module (18) includes a mounting base (22) mounted in one of the openings (17) of the housing (12) and at least one light source (31) mounted in the mounting base (22).

2. Wheel guide rail (11) according to claim 1, **characterized in that** the mounting base (22) includes the bottom (23) and a peripheral wall (24), which delimit a recess open to the inside of the housing (12), in which the light source (31) is accommodated, and **in that** the bottom (23) is a transparent to the light of the light source (31).

3. Wheel guide rail (11) according to claim 2, **characterized in that** the bottom (23) is flush with a flank (15) of the housing (12), in which the openings (17) are formed, or is recessed into the housing (12) behind the flank (15).

4. Wheel guide rail (11) according to claim 2 or 3, **characterized in that** on the outside of the peripheral wall (24), a stop ridge (25) is provided, which lies against an outside of the housing 12.

5. Wheel guide rail (11) according to claim 4, **characterized in that** a mounting slit (34) is provided between the stop ridge (25) and the outside of the housing (12) for introduction of a tool (36), specifically a screwdriver.

6. Wheel guide rail (11) according to claim 4 or 5, **characterized in that** an elastically compressible element (33, 37) is provided between the stop ridge (25) and the outside of the housing (12).

7. Wheel guide rail (11) according to one of claims 2 to 6, **characterized in that** the mounting base (22) is injection-molded in one piece.

8. Wheel guide rail (11) according to one of claims 2 to 7, **characterized in that** the peripheral wall (24) is provided with external threads and a union nut (47) screwed onto the external threads lies against an inside of the housing (12).

9. Wheel guide rail (11) according to one of claims 2 to 7, **characterized in that** the peripheral wall (24) is provided with a peripheral groove (26) on its outside and a clamp (38) lying against an interior of the housing (12) engages into the groove (26) on at least two opposite sites.

10. Wheel guide rail (11) according to one of claims 2 to 7, **characterized in that** the peripheral wall (24) carries an sealing ring (27), which is elastically deformed in contact with the inside of the housing (12).

11. Wheel guide rail (11) according to claim 10, **characterized in that** the sealing ring (27) is in contact with a sharp edge (35) of the housing (12) that delimits the housing's (12) opening (17) accommodating the light module (18).

12. Wheel guide rail (11) according to one of the preceding claims, **characterized in that** the light source (31) is tightly cast into the mounting base (22).

13. Wheel guide rail (11) according to one of the preceding claims, **characterized in that** it further includes a base plate (40) that tightly closes off an open bottom of the housing (12) in releasable fashion.

14. Wheel guide rail (11) according to one of the preceding claims, **characterized in that** the light modules (18) are provided with plugs (20) for power supply and/or control of the light sources and plugs complementary to the plugs of the light modules are movable on sides of the housing and preferably removable from the openings.

15. Vehicle treatment installation, wherein a treatment area (W) is delimited laterally by a vehicle guide rail (11) according to one of the preceding claims.

## Revendications

1. Rail guide-roue (11) pour la limitation latérale d'une zone de lavage (W) d'une installation de traitement de véhicule (1) avec un boîtier allongé (12) et plusieurs modules lumineux (18) répartis le long du boîtier, **caractérisé en ce que** le boîtier (12) présente plusieurs ouvertures (17) réparties sur sa longueur et **en ce que** chaque module lumineux (18) comprend un socle de montage (22), qui est monté dans une des ouvertures (17) du boîtier (12), et au moins un moyen lumineux (31) monté dans le socle de montage (22).

2. Rail guide-roue (1) selon la revendication 1, **caractérisé en ce que** le socle de montage (22) comprend un fond (23) et une paroi périphérique (24), qui limitent une découpe (48) ouverte vers l'intérieur du boîtier (12), dans laquelle le moyen lumineux (31) est installé, et **en ce que** le fond (23) est transparent pour la lumière du moyen lumineux (31).

3. Rail guide-roue selon la revendication 2, **caractérisé en ce que** le fond (23) est disposé au niveau d'un flanc (15) du boîtier (12), dans lequel les ouvertures (17) sont formées, ou est disposé en retrait derrière le flanc (15) vers l'intérieur du boîtier (12) .

4. Rail guide-roue selon la revendication 2 ou 3, **caractérisé en ce qu'**il est prévu sur un côté extérieur de la paroi périphérique (24) une nervure de butée (25), qui s'applique sur un côté extérieur du boîtier (12) .

5. Rail guide-roue (11) selon la revendication 4, **caractérisé en ce qu'**il est prévu entre la nervure de butée (25) et le côté extérieur du boîtier (12) une fente de réception (34) pour l'introduction d'un outil (36), en particulier d'un tournevis.

6. Rail guide-roue (11) selon la revendication 4 ou 5, **caractérisé en ce qu'**il est prévu un élément élastiquement compressible (33, 37) entre la nervure de butée (25) et le côté extérieur du boîtier (12).

7. Rail guide-roue (11) selon l'une quelconque des revendications 2 à 6, **caractérisé en ce que** le socle de montage (22) est moulé en une seule pièce par injection.

8. Rail guide-roue (11) selon l'une quelconque des revendications 2 à 7, **caractérisé en ce que** la paroi périphérique (24) est munie d'un filet extérieur et un écrou-raccord (47) vissé sur le filet extérieur s'applique sur un côté intérieur du boîtier (12).

9. Rail guide-roue (11) selon l'une quelconque des revendications 2 à 7, **caractérisé en ce que** la paroi périphérique (24) est munie d'une rainure périphérique (26) sur son côté extérieur et un étrier (38) s'appliquant sur un côté intérieur du boîtier (12) s'engage dans la rainure (26) au moins en deux points opposés l'un à l'autre.

10. Rail guide-roue (11) selon l'une quelconque des revendications 2 à 7, **caractérisé en ce que** la paroi périphérique ((24) porte une bague d'étanchéité (27), qui est élastiquement déformée par contact avec le côté intérieur du boîtier (12).

11. Rail guide-roue (11) selon la revendication 10, **caractérisé en ce que** la bague d'étanchéité (27) est en contact avec une arête vive (35) du boîtier (12), qui limite l'ouverture (17) de celui-ci contenant le module lumineux (18).

12. Rail guide-roue (11) selon l'une quelconque des revendications précédentes, **caractérisé en ce que** le moyen lumineux (31) est moulé de façon étanche dans le socle de montage (22).

13. Rail guide-roue (11) selon l'une quelconque des revendications précédentes, **caractérisé en ce qu'**il comprend en outre une plaque de base (40), qui ferme de façon étanche et amovible un côté inférieur ouvert du boîtier (12).

14. Rail guide-roue (11) selon l'une quelconque des revendications précédentes, **caractérisé en ce que** les modules lumineux (18) sont munis de connecteurs (20) pour l'alimentation en énergie et/ou pour la commande des moyens lumineux et des fiches complémentaires aux connecteurs des modules lumineux sont mobiles sur des côtés du boîtier et peuvent de préférence être extraites hors des ouvertures.

15. Installation de traitement de véhicule, dans laquelle une zone de traitement (W) est limitée latéralement par un rail guide-roue (11) selon l'une quelconque des revendications précédentes.
